# EUROPEAN PATENT APPLICATION

(11) **EP 2 051 496 A1**
(43) Date of publication of application: **22.04.2009**
(21) Application number: 08018083.9
(22) Date of filing: 15.10.2008
(51) Int. Cl.: H04N 1/00, H04N 1/32

(54) **Image forming system including television receiver and image forming apparatus**

(30) Priority: 15.10.2007 JP 2007268101
(71) Applicant: Funai Electric Co., Ltd., Daito-shi, Osaka 574-0031 (JP)
(72) Inventor: Onomatsu, Takehiro Funai Electric Co., Ltd., Daito-shi Osaka 574-0013 (JP)
(74) Representative: Grünecker, Kinkeldey, Stockmair & Schwanhäusser Anwaltssozietät

(57) **Abstract**

An image forming system (1) including a television receiver (2) and an image forming apparatus (3). The television receiver has a television receiver side mounting unit (22) to mount a storage medium (5) which can store the picked-up image data. The image forming apparatus has an image forming apparatus side mounting unit (31) to mount the above storage medium. When the storage medium is mounted in the television receiver side mounting unit (22), the list screen of the picked-up image data stored in the storage medium (5) is displayed. When a user selects the picked-up image data to be printed from among the whole picked-up image data by using an operation means (4) and subsequently sets the number of copies of the selected picked-up image data, the print setting data including data of the selected picked-up image data and data indicating the number of copies of the selected picked-up image data are stored in the storage medium (5).

## Description

### BACKGROUND OF THE INVENTION

### 1. Field of the Invention

The present invention relates to an image forming system including a television receiver and an image forming apparatus.

### 2. Description of the Related Art

Conventionally, a user often mounts a storage medium such as an SD card which stores picked-up image data (data of images taken with an image pickup device such as a digital camera, for example) to print the picked-up image. Generally, when the SD card is mounted in a photo printer with a liquid crystal screen, the picked-up image stored on the SD card is displayed in the liquid crystal display. The user selects an image to be printed and inputs data indicating the number of copies and so on while watching the liquid crystal display to print the picked-up image. However, the liquid crystal display of this type is hard to watch because it is small in size, and thereby is not user-friendly.

There is a known image forming system including a printer and a television receiver which is connected to the printer and which can mount an SD card in which the picked-up image is stored (Japanese Laid-Open Patent Publication Nos. 11- 275503 and 2007- 34458, for example). The image forming system of this type can display the picked-up image stored on the SD card on a display of the television receiver, so that the user can carry out a print setting while watching the picked-up image displayed on the display and prints out the picked-up image using the printer connected to the television receiver. However, in the image forming system of this type, the television receiver and the printer has to be connected to each other, so that it is not user-friendly.

### SUMMARY OF THE INVENTION

An object of the present invention is to provide an image forming system including a television receiver and an image forming apparatus, in which not only can the print setting of the picked-up image be easily done, but also printing can be carried out without connecting the television receiver and the image forming apparatus.

According to the present invention, this object is achieved by an image forming system including a television receiver which can display a television broadcast and an image forming apparatus which can print picked-up image data taken with an image pickup device.

The television receiver comprises: a tuner which receives a television broadcast; a display means to display images of the television broadcast received by the tuner; an operation means which is operated by a user; a television receiver side mounting unit which mounts a storage medium which can store the picked-up image data; and a television receiver control means which controls respective units of the television receiver.

The image forming apparatus comprises: a paper sheet carrying mechanism which carries a paper sheet; an image forming means which forms an image on the paper sheet carried by the paper sheet carrying mechanism; an image forming apparatus side mounting unit which mounts the storage medium; and an image forming apparatus control means which controls respective units of the image forming apparatus.

When the storage medium is mounted in the television receiver side mounting unit, the television receiver control means displays a list screen of the picked-up image data, which are stored in the storage medium, on the display means.

When a user selects picked-up image data to be printed from among the whole picked-up image data by using the operation means and subsequently sets number of copies of the selected picked-up image data, the television receiver control means stores, in the storage medium, print setting data including not only the selected picked-up image data but also data indicating the number of copies of the selected picked-up image data.

When the storage medium is mounted in the image forming apparatus side mounting unit, the image forming apparatus control means prints the selected picked-up image data in accordance with the print setting data stored in the storage medium.

In the above configuration, when the storage medium is mounted in the television receiver side mounting unit, the list screen of the picked-up image data, which are stored in the storage medium, is displayed on the display means. When the user selects the picked-up image data to be printed from among the whole picked-up image data by using the operation means and subsequently sets the number of copies of the selected picked-up image data, the print setting data including not only the selected picked-up image data but also the data indicating the number of copies of the picked-up image are stored in the storage medium. Consequently, the above configuration enables the user to select the picked-up image data to be printed while watching the display means, and thereby is user-friendly.

Moreover, the image forming apparatus control means prints the selected picked-up image data in accordance with the print setting data stored in the storage medium. Consequently, even when the television receiver and the image forming apparatus are not connected to each other in the conventional manner, the user can carry out the desired printing in accordance with the print setting data, and thereby the image forming system is user-friendly.

Preferably, when a user selects picked-up image data to be printed from among the whole picked-up image data by using the operation means and subsequently sets number of copies of the selected picked-up image data, the television receiver control means stores, in the selected picked-up image data in the storage medium, print setting data which include not only data whether or not the selected picked-up image data is printed but also the data indicating the number of copies of the selected picked-up image data.

Preferably, when a user selects picked-up image data to be printed from among the whole picked-up image data by using the operation means, the television receiver control means changes a file name of the selected picked-up image data to a name including data whether or not the selected picked-up image data is printed.

Further preferably, when the user sets the number of copies of the selected picked-up image data by using the operation means, the television receiver control means changes the file name of the selected picked-up image data to a name which includes data indicating the number of copies of the picked-up image data in addition to the data whether or not the selected picked-up image data is printed.

### BRIEF DESCRIPTION OF THE DRAWINGS

The present invention will be described below with reference to the annexed drawings. It is to be noted that all the drawings are shown for the purpose of illustrating the technical concept of the present invention or embodiments thereof, wherein:
FIG. 1 is an appearance diagram of an image forming system including a television receiver and a printer according to a first preferred embodiment of the present invention;
FIG. 2 is a block diagram showing an internal configuration of the television receiver in FIG. 1;
FIG. 3 is a block diagram showing an internal configuration of the printer in FIG. 1;
FIG. 4 is a schematic diagram showing a list screen of picked-up image data displayed on a display of the television receiver in FIG. 1;
FIG. 5 is a schematic diagram showing data included in picked-up image data in an image forming system including a television receiver and a printer according to a second preferred embodiment of the present invention; and
FIG. 6 is a schematic diagram showing a list screen of picked-up image data displayed on a display of the television receiver in an image forming system according to a third preferred embodiment of the present invention

### DESCRIPTION OF THE PREFERRED EMBODIMENTS

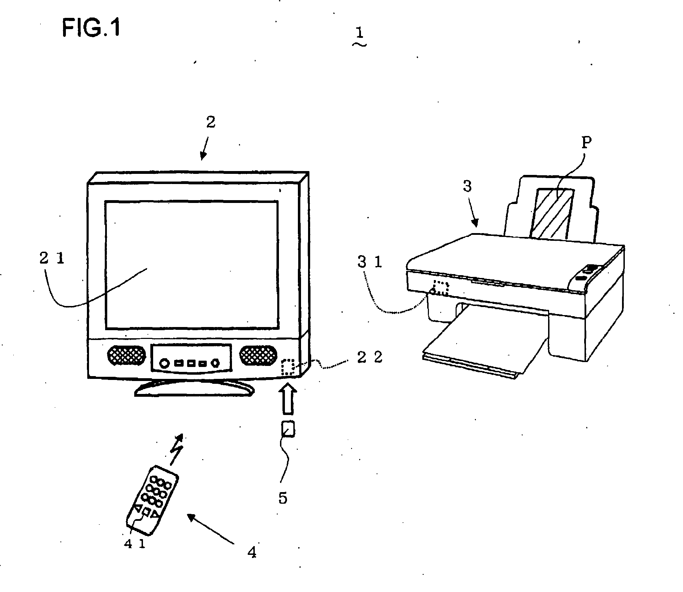

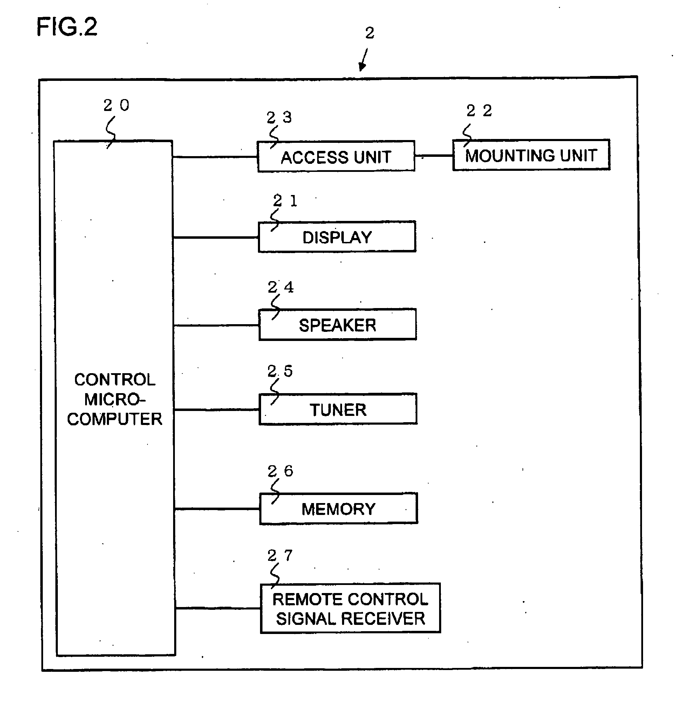

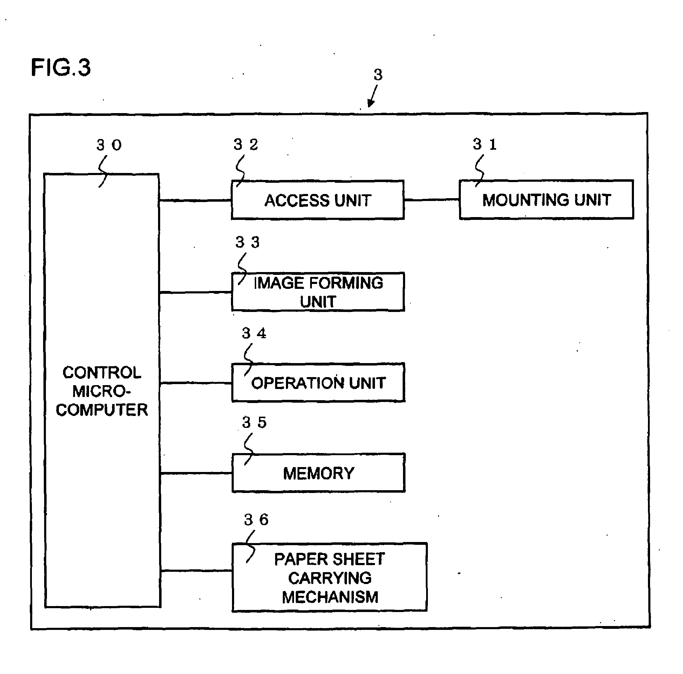

An image forming system including a television (television receiver) and a printer (image forming apparatus) according to a first preferred embodiment of the present invention is described below with reference to FIGS. 1 to 3. FIG. 1 shows an appearance of an image forming system 1 including a television receiver 2 and a printer 3, FIG. 2 is a block diagram showing an internal configuration of the television receiver 2, and FIG. 3 is a block diagram showing an internal configuration of the printer 3. The television receiver 2 and the printer 3 are not connected to each other via a cable or the like, so that it is not necessary to place them in one room. The television receiver 2 is operated by operating an operation button 41 of a remote controller 4.

As shown in FIG. 2, the television receiver 2 includes a tuner 25 which receives television broadcasts including television programs, a display 21 (display means) which displays images of the television broadcasts received by the tuner 25, various messages, and so on, a speaker 24 which outputs audios of the television broadcasts received by the tuner 25, and a control microcomputer 20 (television receiver control means) which controls respective units of the television receiver 2.

The television receiver 2 further includes a memory 26 which stores a program to operate the control microcomputer 20, a remote control signal receiver 27 which receives infrared light signals transmitted from the remote controller 4 and outputs code signals included in the infrared light signals to the control microcomputer 20, a mounting unit 22 (mounting unit of the television receiver) which mounts an SD card 5 (storage medium) (refer to FIG. 1) which can store picked-up image data, and an access unit 23 which reads data from and writes data on the SD card 5 mounted in the mounting unit 22.

When the SD card 5 is mounted in the mounting unit 22, the control microcomputer 20 displays a list screen of the picked-up image data, which are stored on the SD card 5, on the display 21. Moreover, when a user operates the remote controller 4 to select the picked-up image data to be printed from among the whole picked-up image data and subsequently sets the number of copies of the selected picked-up image data, the control microcomputer 20 stores, onto the SD card 5, print setting data including not only the selected picked-up image data but also data indicating the number of copies of the selected picked-up image data. Details are described hereinafter.

As shown in FIG. 3, the printer 3 includes a mounting unit 31 (mounting unit of the image forming apparatus) which mounts the SD card 5 (refer to FIG. 1), an access unit 32 which reads data from and writes data on the SD card 5 mounted in the mounting unit 31, and a paper sheet carrying mechanism 36 which carries a paper sheet P in a predetermined direction.

The printer 3 further includes an image forming unit 33 (image forming means) which forms an image on the paper sheet carried by the paper sheet carrying mechanism 36 in the predetermined direction, an operation unit 34 (operation means) which is used for an input operation of the user, a control microcomputer 30 (control means of the image forming apparatus) which controls the respective units of the printer 3, and a memory 35 which stores a program to operate the control microcomputer 30.

When the SD card 5 is mounted in the mounting unit 31, the control microcomputer 30 prints the picked-up image data in accordance with the print setting data stored by the control microcomputer 20 of the television receiver 2. Details are described hereinafter.

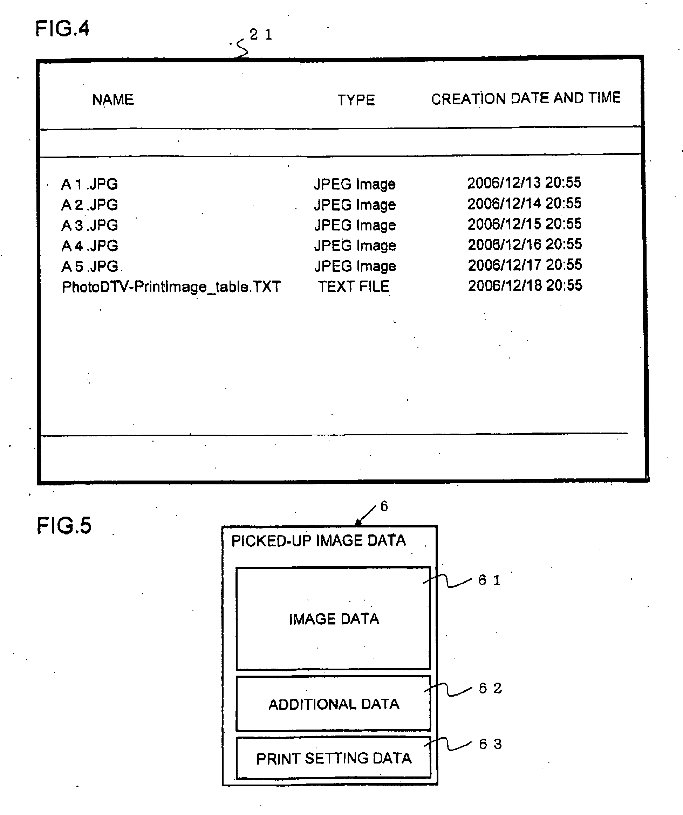

Next, the print setting data stored on the SD card 5 is described with reference to FIG. 4. FIG. 4 shows the display 21 which displays the data stored on the SD card 5.

As shown in FIG. 4, the SD card 5 stores the picked-up image data named A1. JPG to A5. JPG and the print setting data of text file format named PhotoDTV-PrintImage _table.TXT.

For example, when the user selects the picked-up image data of A1. JPG and A3. JPG from among the picked-up image data of A1. JPG to A5. JPG and then provides an instruction to print out two copies of A1. JPG and three copies of A3. JPG in advance, the control microcomputer 20 makes the SD card 5 store the print setting data of PhotoDTV-PrintImage_table.TXT based on the instruction. The print setting data of PhotoDTV-PrintImage_table.TXT may include the print setting data of print quality, both side printing, and so on.

Subsequently, when the user puts the SD card 5 in the mounting unit 31 in the printer 3, the control microcomputer 30 reads the data of PhotoDTV-PrintImage_table.TXT and carries out a printing in accordance with the data. In the present preferred embodiment, the printer 3 prints out the two copies of A1. JPG and the three copies of A3 JPG.

As described above, according to the image forming system 1 of the present preferred embodiment, the control microcomputer 20 in the television receiver 2 displays the list screen of the picked-up image data which are stored on the SD card 5 on the display 21. Moreover, when the user selects the picked-up image data to be printed from among the whole picked-up image data and sets the number of copies of the selected picked-up image data, the control microcomputer 20 stores, onto the SD card 5, the print setting data including not only the selected picked-up image data but also data indicating the number of copies of the selected picked-up image data. This system enables the user to select the picked-up image data to be printed while watching the display 21, and thereby is user-friendly.

Moreover, the control microcomputer 30 in the printer 3 prints the selected picked-up image data in accordance with the print setting data stored on the SD card 5. Consequently, even when the television receiver and the printer are not connected to each other in the conventional manner, the control microcomputer 30 enables the user to carry out the desired printing in accordance with the print setting data, and thereby the image forming system 1 is user-friendly.

Next, an image forming system including a television receiver and a printer according to a second preferred embodiment of the present invention is described below with reference to the drawings. The present preferred embodiment corresponds to claim 2. The television receiver 2, the printer 3, and the image forming system 1 in the present preferred embodiment have the same configuration as that in FIGS. 1 to 3 described above, so that the description of the configuration is omitted.

When the SD card 5 is mounted in the mounting unit 22, the control microcomputer 20 in the television receiver 2 displays a list screen of the picked-up image data, which are stored on the SD card 5, on the display 21. Moreover, when the user operates the remote controller 4 to select the picked-up image data to be printed from among the whole picked-up image data and subsequently sets the number of copies of the selected picked-up image data, the control microcomputer 20 stores the print setting data, which includes the data whether or not the selected picked-up image data is printed, the data indicating the number of copies of the selected picked-up image data, and so on, in the selected picked-up image data on the SD card 5. Details are described hereinafter.

When the SD card 5 is mounted in the mounting unit 31, the control microcomputer 30 in the printer 3 prints the picked-up image data in accordance with the print setting data included in the picked-up image data. Details are described hereinafter.

Next, the print setting data stored in the picked-up image data is described with reference to FIG. 5. FIG. 5 is a schematic diagram showing data components of picked-up image data 6 (in each picked-up image data file) stored on the SD card 5. The picked-up image data 6 includes image data 61, additional data 62 which includes data of not only a date on which the image data is taken but also a person who takes the image data, and print setting data 63.

The print setting data 63 includes the data whether or not the picked-up image data is printed, the data indicating the number of copies of the picked-up image data, and so on. The control microcomputer 30 reads the respective picked-up image data 6 including the print setting data 63 stored on the SD card 5, and carries out the printing in accordance with the print setting data 63.

Specifically, assume that when the SD card 5 stores the picked-up image data of A1. JPG to A5. JPG, the SD card 5 is mounted in the mounting unit 22 in the television receiver 2, and the user selects the picked-up image data of A1. JPG and A3. JPG and provides the instruction to print out the two copies of A1. JPG and the three copies of A3. JPG In this case, the control microcomputer 20 stores the print setting data in the picked-up image data A1. JPG and the picked-up image data A3. JPG, respectively.

Subsequently, when the user puts the SD card 5 in the mounting unit 31 in the printer 3, the control microcomputer 30 reads the picked-up image data A1. JPG to A5. JPG including the print setting data and carries out the printing in accordance with the print setting data. In this case, the printer 3 prints out the two copies of A1. JPG and the three copies of A3. JPG.

As described above, according to the image forming system 1 of the present preferred embodiment, the control microcomputer 20 in the television receiver 2 displays the list screen of the picked-up image data which are stored on the SD card 5 on the display 21. Moreover, when the user selects the picked-up image data to be printed from among the whole picked-up image data and then sets the number of copies of the selected picked-up image data, the control microcomputer 20 stores the print setting data including the data whether or not the selected picked-up image data is printed, the data indicating the number of copies of the selected picked-up image data, and so on, in the selected picked-up image data. This system enables the user to select the picked-up image data to be printed while watching the display 21, and thereby is user-friendly.

Moreover, the control microcomputer 30 in the printer 3 prints the picked-up image data 6 in accordance with the print setting data 63 in the picked-up image data stored on the SD card 5. Consequently, even when the television receiver and the printer are not connected to each other in the conventional manner, the control microcomputer 30 enables the user to carry out the desired printing in accordance with the print setting data 63, and thereby the image forming system 1 is user-friendly.

Next, an image forming system including a television receiver and a printer according to a third preferred embodiment of the present invention is described below with reference to the drawings. The present preferred embodiment corresponds to claims 3 and 4. The television receiver 2, the printer 3, and the image forming system 1 in the present preferred embodiment have the same configuration as that in FIGS. 1 to 3 described above, so that the description of the configuration is omitted.

When the SD card 5 is mounted in the mounting unit 22, the control microcomputer 20 in the television receiver 2 displays a list screen of the picked-up image data, stored on the SD card 5, on the display 21. Moreover, when the user operates the remote controller 4 to select the picked-up image data to be printed from among the whole picked-up image data, the control microcomputer 20 changes a file name of the picked-up image data selected by the user to a name indicating data whether or not the selected picked-up image data is printed, the data indicating the number of copies of the picked-up image data, and so on. Details are described hereinafter.

When the SD card 5 is mounted in the mounting unit 31, the control microcomputer 30 in the printer 3 prints the selected picked-up image data in accordance with the file name of the selected picked-up image data which is changed by the control microcomputer 20 in the television receiver 2 and stored on the SD card 5. Details are described hereinafter.

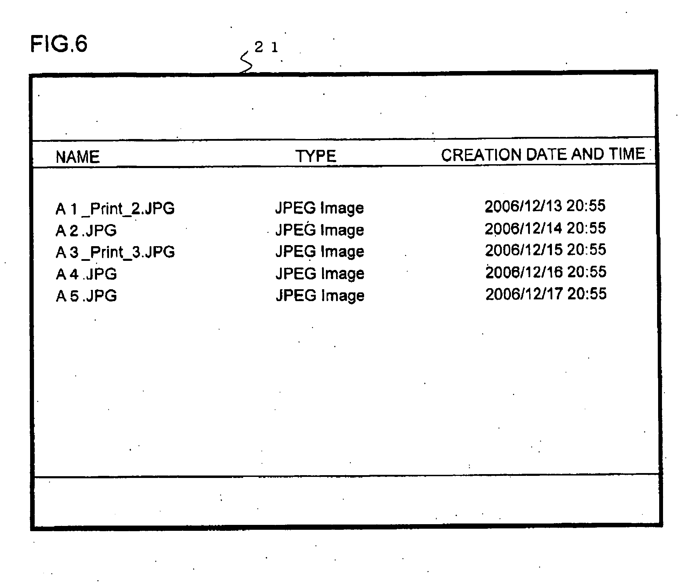

Next, the file name of the picked-up image data stored on the SD card 5 is described with reference to FIG. 6. FIG. 6 shows the display 21 which displays the data stored on the SD card 5. In this case, assume that the picked-up image data A1. JPG to A5. JPG are stored on the SD card 5 in advance.

At first, the SD card 5 is mounted in the mounting unit 22 in the television receiver 2. Subsequently, when the user selects the picked-up image data of A1. JPG and A3. JPG and provides an instruction to print out the two copies of A1. JPG and the three copies of A3. JPG, the control microcomputer 20 changes the file name of A1. JPG to A1_Print_2. JPG and the file name of A3. JPG to A3_Print_3. JPG, respectively. Consequently, the picked-up image data shown in FIG. 6 is stored on the SD card 5. In this case, the term "Print" which is included in the file name of the picked-up image data indicates an execution of the print, and the number with the character "_" right behind the word "Print", that is "_2", for example, indicates the number of copies of the picked-up image data. The term "_2" indicates that the two copies are printed.

Subsequently, when the user mounts the SD card 5 in the mounting unit 31 in the printer 3, the control microcomputer 30 prints the picked-up image data in accordance with the file name of the picked-up image data stored on the SD card 5. In the present preferred embodiment, the printer 3 prints out the two copies of A1. JPG and the three copies of A3 JPG.

As described above, according to the image forming system 1 of the present preferred embodiment, the control microcomputer 20 in the television receiver 2 displays the list screen of the picked-up image data which are stored on the SD card 5 on the display 21. Moreover, when the user selects the picked-up image data to be printed from among the whole picked-up image data and sets the number of copies of the selected picked-up image data, and so on, the control microcomputer 20 changes the file name of the selected picked-up image data to the name which indicates the data whether or not the picked-up image data is printed, the number of copies of the picked-up image data, and so on. This system enables the user to select the picked-up image data to be printed while watching the display 21, and thereby is user-friendly.

Moreover, the control microcomputer 30 in the printer 3 carries out the print processing in accordance with the file name of the picked-up image data stored on the SD card 5. Consequently, even when the television receiver and the printer are not connected to each other in the conventional manner, the control microcomputer 30 enables the user to carry out the desired printing in accordance with the print setting data, and thereby the image forming system 1 is user-friendly.

It is to be noted that the present invention is not limited to the above-described embodiments, and various modifications are possible. For example, in the above preferred embodiments, the print setting is carried out while the SD card 5 is mounted in the television receiver 5, however, the print setting can also be carried out while the SD card is mounted in the personal computer.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

This application is based on Japanese patent application 2004-362253 filed October 15, 2007, the contents of which are hereby incorporated by reference.

## Claims

1. An image forming system including a television receiver which can display a television broadcast and an image forming apparatus which can print picked-up image data taken with an image pickup device, wherein
the television receiver comprises:
a tuner which receives a television broadcast;
a display means to display images of the television broadcast received by the tuner;
an operation means which is operated by a user;
a television receiver side mounting unit which mounts a storage medium which can store the picked-up image data; and
a television receiver control means which controls respective units of the television receiver, wherein
the image forming apparatus comprises:
a paper sheet carrying mechanism which carries a paper sheet;
an image forming means which forms an image on the paper sheet carried by the paper sheet carrying mechanism;
an image forming apparatus side mounting unit which mounts the storage medium; and
an image forming apparatus control means which controls respective units of the image forming apparatus, wherein
when the storage medium is mounted in the television receiver side mounting unit, the television receiver control means displays a list screen of the picked-up image data, which are stored in the storage medium, on the display means, wherein
when a user selects picked-up image data to be printed from among the whole picked-up image data by using the operation means and subsequently sets number of copies of the selected picked-up image data, the television receiver control means stores, in the storage medium, print setting data including not only the selected picked-up image data but also data indicating the number of copies of the selected picked-up image data, and wherein
when the storage medium is mounted in the image forming apparatus side mounting unit, the image forming apparatus control means prints the selected picked-up image data in accordance with the print setting data stored in the storage medium.

2. The image forming system according to claim 1, wherein
when a user selects picked-up image data to be printed from among the whole picked-up image data by using the operation means and subsequently sets number of copies of the selected picked-up image data, the television receiver control means stores, in the selected picked-up image data in the storage medium, print setting data which include not only data whether or not the selected picked-up image data is printed but also the data indicating the number of copies of the selected picked-up image data.

3. The image forming system according to claim 1, wherein
when a user selects picked-up image data to be printed from among the whole picked-up image data by using the operation means, the television receiver control means changes a file name of the selected picked-up image data to a name including data whether or not the selected picked-up image data is printed.

4. The image forming system according to claim 3, wherein
when the user sets the number of copies of the selected picked-up image data by using the operation means, the television receiver control means changes the file name of the selected picked-up image data to a name which includes data indicating the number of copies of the picked-up image data in addition to the data whether or not the selected picked-up image data is printed.
